# EUROPEAN PATENT APPLICATION

(11) **EP 2 602 710 A1**
(43) Date of publication of application: **12.06.2013**
(21) Application number: 12195741.9
(22) Date of filing: 28.08.2008
(51) Int. Cl.: G06F 9/30

(54) **Method of encoding register instruction fields**

(30) Priority: 05.11.2007 US 985458 P
(62) Divisional of application: 08798881.2
(71) Applicant: Aspen Acquisition Corporation, San Diego, CA 92121 (US)
(72) Inventor: Moudgill, Mayan, New York, NY 10607 (US)
(74) Representative: Dunlop, Hugh Christopher

(57) **Abstract**

The method selects registers by a register instruction field having x bits. A first group of registers has up to 2^{y} registers and a second group of registers has up to 2^{z} registers where y and z are at least one and not great than x. The method includes encoding an instruction field with x bits wherein y of the x bits designates a register of the first group and z bits of the x bits designates a register of the second group. The register of the first group designated by the y bits of the instruction field and the register of the second group designated by the z bits of the instruction field are selected.

## Description

### Cross-Reference to Related Application(s)

This application relies for priority on United States Provisional Patent Application Serial No. 60/985,458, which was filed on November 5, 2007, the contents of which are incorporated herein by reference.

### Field of the Invention

The present disclosure relates to instruction encoding and more specifically to a method of encoding register instruction fields.

### Background of the Invention

Generally, instructions are designed so that there are a certain number of fields available to specify registers.

This design parameter holds true for architectures with a fixed instruction word size. For example, RISC (Reduced Instruction Set Computing) architectures rely on fixed instruction word size. This is also generally true of CISC (Complex Instruction Set Computing) architectures as well. Other examples also may be appreciated by those skilled in the art. For example, in the ARM (Advanced RISC Machine) architecture, up to four register fields can be specified. In the POWER (Performance Optimization With Enhanced RISC) architecture, up to three register fields can be specified. In the Alpha architecture, up to three register fields can be specified. Sometimes, however, additional registers are needed.

As may be appreciated by those skilled in the art, different "additional registers" include dedicated registers, hard coded registers, and register pairs.

One type of "additional register" is the dedicated register. The dedicated register is a type of special purpose register. For instance, the original POWER architecture included an instruction designed to multiply two 32-bit values to produce a 64-bit result. Since the registers utilized by the POWER architecture were 32-bit values, four register were needed for the calculation: two input registers and two output registers. The POWER architecture specified that the upper 32 bits of the multiply would go to a special purpose MQ (Multiplier/Quotient) register.

A second type of "additional register" is known as the hard coded register. The hard coded register is a specific register for which there are a number of examples. One example concerns the PowerPC architecture. In the PowerPC architecture, there are eight condition field registers. In this architecture, when an instruction executes an arithmetic operation, such as an addition (or "add"), a condition field is set. As a result, when executing the addition, four registers are required: two input registers (one for each input value), one output integer register, and one output condition field. As should be appreciated by those skilled in the art, these types of instructions always write to condition field register 0.

A third type of "additional register" is the register pair. The POWER2 architecture helps to define the concept of the register pair. For the store quad instruction in the POWER2 architecture, two input integer registers and two input floating point registers are needed. The two input registers compute the address. The two input floating point registers permit storage of values. Instead of specifying two floating point registers, only one register is specified in the instruction. That register and the next larger register are stored to memory.

The prior art, however, fails to adequately address instruction encoding. Moreover, the prior art also fails to provide adequate methods for encoding register instruction fields, among other deficiencies.

### Summary of the Invention

The present invention is provided to address one or more of the inadequacies identified in the prior art.

Accordingly, in one aspect, the invention addresses overloaded field encoding.

In one embodiment, to address overload field encoding, the invention provides a method that selects registers by a first register instruction field having x bits. A first group of registers with up to 2^{y} registers and a second group of registers with up to 2^{z} registers are selected. In this embodiment, y and z are at least one and are not greater than x. In other words, 1 ≤ y ≤ x and 1 ≤ z ≤ x. This method includes encoding the first instruction field with x bits. Here, the y bits, which are a subset of the x bits, designate a register of the first group. The z bits, which are also a subset of the x bits, designate a register of the second group. The method selects the register of the first group (designated by the y bits of the first instruction field) and the register of the second group (designated by the z bits of the first instruction field). In this embodiment, generally one of y or z is equal to x and the other is less than or equal to x.

In one contemplated embodiment of the invention, x and y may be three bits and z may be two bits.

In another contemplated embodiment, the instruction word may have three register instruction fields.

In still another contemplated embodiment, the method may be performed to overload one or more of register instruction fields in the same instruction word.

Other embodiments may become apparent to those skilled in the art from the discussion that follows and the drawings appended hereto.

### Brief Description of the Drawings

The invention will now be described in connection with the drawings appended hereto, in which:

Fig. 1 is a diagram for the encodings, using 3-bit fields, of a RPU compare instruction, with two input vector registers and an output mask register, the RPU compare instruction being one instruction type that may be used with the invention;

Fig. 2 is a diagram illustrating the format of a rmax instruction, which may be employed in by one architecture contemplated for use with the invention; and

Figs. 3 and 4 provide a diagram, in flow-chart format, illustrating one contemplated embodiment of the method of the invention.

### Detailed Description of Embodiment(s) of the Invention

The invention will now be described in connection with one or more embodiments. The embodiments of the invention that are described are not intended to be limiting of the invention in any way. To the contrary, the embodiments are intended to illustrate, by way of examples, the breadth and scope of the invention. It is expected that those skilled in the art will appreciate equivalents and variations of the invention, as illuminated by the embodiments that follow. It is intended that the invention encompass those equivalents and variations.

By way of example, a SBX2 architecture will be used to explain the present method of encoding and execution. The SBX2 architecture is a video interface (input/output device) manufactured by Systronix, Inc. of Salt Lake City, Utah (USA). While the invention is discussed in connection with the SBX2 architecture, the invention is not intended to be applicable only to this particular architecture. As will be made apparent, the invention may be employed on other architectures and these other architectures are intended to fall within the scope of the invention.

For the SXB2, a RPU (Ray Processing Unit) instruction word is 21 bits long. The RPU instruction word includes space for three 3-bit register instruction fields. There are three categories of registers available: (1) eight vector registers, (2) four mask registers, and (3) four accumulator registers.

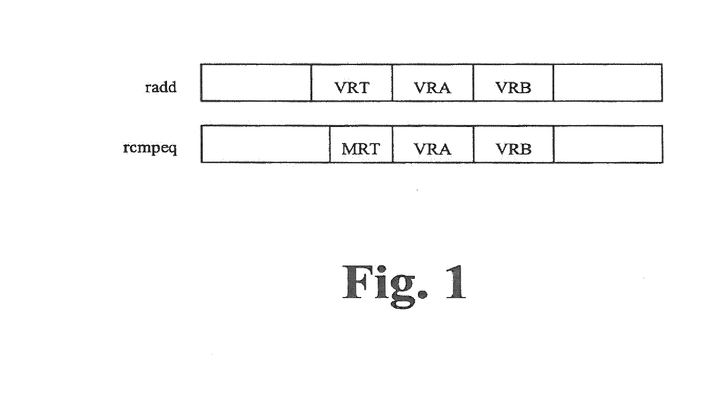

As should be appreciated by those skilled in the art, a RPU vector add instruction specifies two input registers and one output vector register. A RPU compare instruction specifies two input vector registers and an output mask register. The encodings of these registers, using the three 3-bit fields, are shown in Fig. 1. As illustrated, the vector register target (VRT) field requires three bits to specify one of eight registers, while the mask register target (MRT) requires two bits to specify one of four mask register targets. VRA and VRB identify two vector register inputs.

The SBX2 architecture includes an rmax instruction. The rmax instruction requires two vector register inputs, specified as VRA and VRB in Fig. 1. For each element position within a vector, the rmax instruction selects the maximum of the two vectors, and writes the maximum to a vector output. Additionally, the rmax instruction writes a 1/0 at that element position to a mask register output. Thus, the rmax instruction specifies two targets - a vector register and a mask register. As is immediately apparent, the rmax instructions requires that four registers be designated with only three fields.

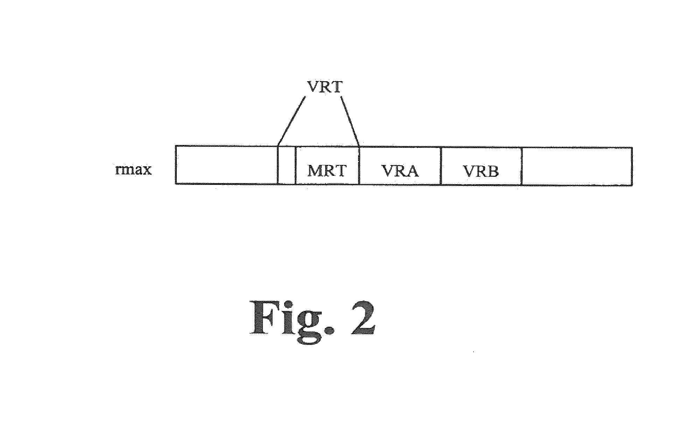

For this example in the SBX2 architecture, the method of the invention "overloads" the target register field. This means that the method of the invention uses the target register field to specify both the vector and the mask register targets. All three bits of the target register field are used to specify the VRT register, and the lower two bits of the target register field are used to specify the MRT register. The format of the rmax instruction is illustrated in Fig. 2. As shown, the MRT portion of the VRT register field is designated. As noted, the MRT portion of the VRT register occupies the lower two bits that are overloaded to specify the mask register target, MRT.

For the invention, an example of the rmax operation is provided below in Code Segment #1. It is noted that Code Segment #1 is merely one possible expression for the rmax instruction. 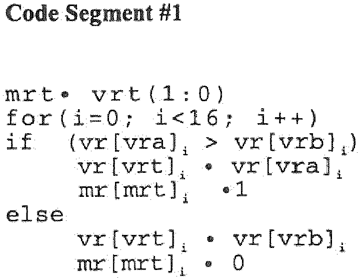 In Code Segment #1, "vrt" is the designation of the target register VRT and "mrt" is the last two bits of the VRT address that designates the mask register MRT.

All elements of the target register, VRT, are set to the element-wise maximum of the elements of the two input vector registers, VRA and VRB. The lower 16 bits of vector mask register MRT are set to 1 if the corresponding element in VRA is greater than that in VRB. After execution of the rmax instruction, the value of the upper 16 bits of the target vector mask register MRT are undefined.

This approach has several advantages over the previously used approaches for specifying additional registers. First, it allows flexibility. Since any mask register may be used as the target of a rmax instruction, it is possible to have up to four rmax operations execute successively before having to reuse an mask register target. Second, the approach simplifies decoding. The mask target registers and the vector target registers are always specified by the same bits in the instruction word, even when the instruction requires more than three register to be specified.

Another example of overloading involves RPU multiply and reduce saturating with shift and rotation instruction. The operation may be expressed as set forth in Code Segment #2, below. 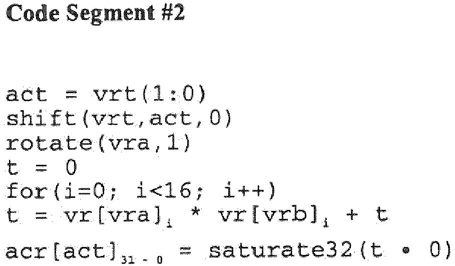 With respect to Code Segment #2, "act" is the last two bits of the VRT address and the designation of the accumulator, ACT

In this embodiment of the invention, all elements of the input registers, VRA and VRB, are multiplied together and the products are added. The resultant sum is shifted left by one position and then saturated. The result of this operation is written to the lower 32 bits of the accumulator ACT. The value in ACT is then shifted into register VRT, which is formed by concatenating "s" and "act", similar to the behavior of an rshift instruction with an "acsh" field of 0. The register pair containing VRA is rotated by 1.

With respect to the method of the invention, although each of the examples have used overloading of a single register instruction field and, specifically, an output register instruction field, any of the register instruction fields may be overloaded. Moreover, more than one register instruction field may be over loaded in the same instruction word. Other variations also are contemplated to be encompassed by the scope of the invention, as should be apparent to those skilled in the art.

The present method of overloaded field encoding may be generalized to encompass a wide variety of processing algorithms, techniques, and architectures. As noted above, the present invention is not limited to a particular architecture. It is contemplated that, where more registers are required to be specified than the number of register instruction fields available for the operation to be performed, the present overloading method may be employed.

From a general perspective, the overloading method of the invention selects registers by a register instruction field having x bits. A first group of registers includes up to 2^{y} registers. A second group of registers includes 2^{z} registers. The variables y and z are at least one, but not greater than x. The method includes encoding the instruction field with x bits, where y bits of the x bits designates a register of the first group and where z bits of the x bits designates a register of the second group. The register of the first group is designated by the y bits of the instruction field and the register of the second group is designated by the z bits of the instruction field.

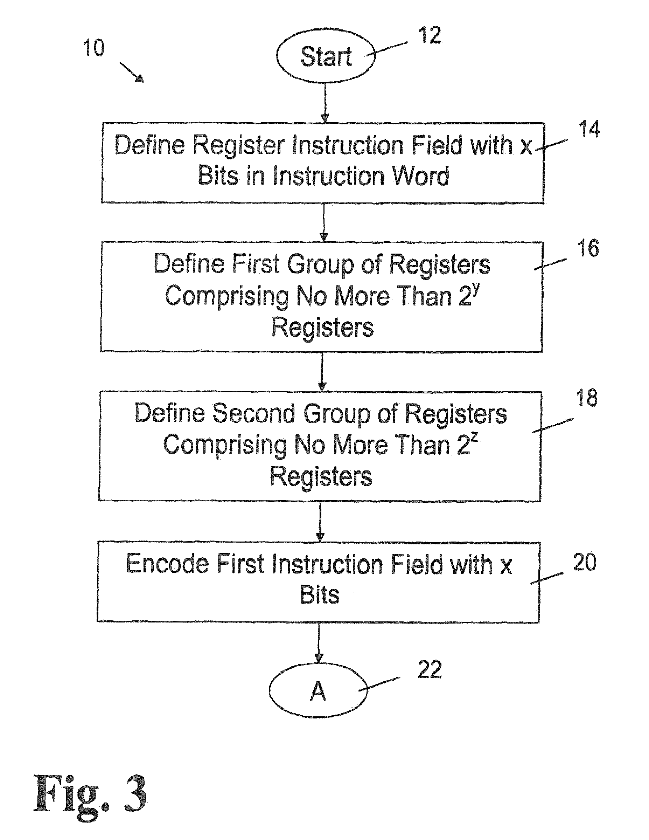

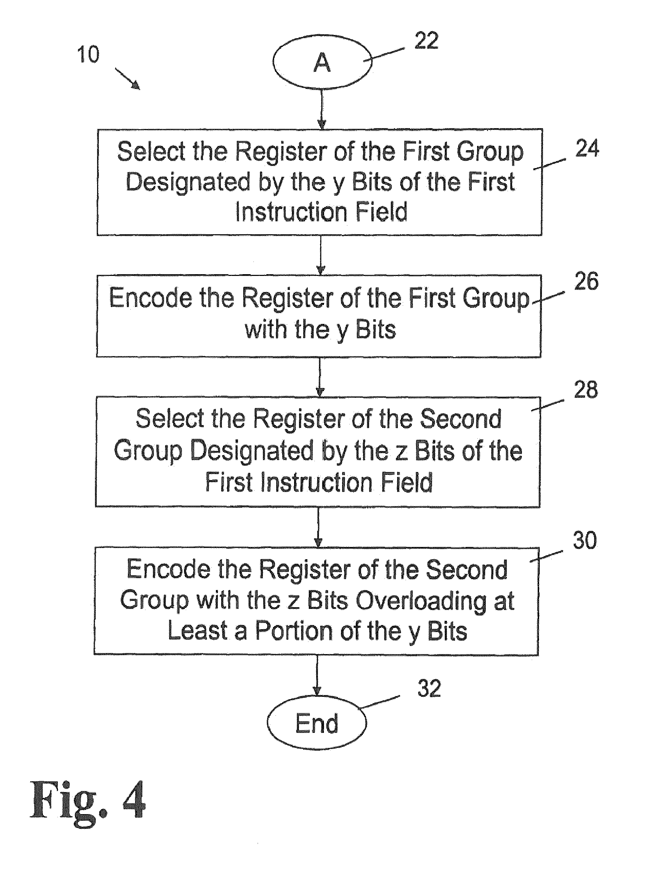

Reference is now made to Figs. 3 and 4, which provide a flow chart that outlines the general method 10 of the invention.

The method 10 begins at 12. At 14, the method 10 proceeds to define a register instruction field with x bits in an instruction word. At 16, the method 10 defines a first group of registers comprising no more than 2^{y} registers. At 18, the method 10 defines a second group of registers comprising no more than 2^{z} registers. At 20, the method 10 encodes a first instruction field with x bits. At this point, the y bits of the x bits designate a register of the first group and z bits of the x bits designate a register of the second group. Then, the method 10 proceeds to 24, where the register of the first group designated by the y bits of the first instruction field is selected. At 26, the method 10 encodes the register of the first group with the y bits. At 28, the method 10 selects the register of the second group designated by the z bits of the first instruction field. At 30, the method 10 encodes the register of the second group with the z bits, the z bits overloading at least a portion of the y bits. It is noted that x, y, and z are integers, y and z are at least one, and y and z are not greater than x. The method 10 ends at 32. With respect to Figs 3 and 4, "A" refers to the connector 22 that establishes continuity between the figures.

As may be appreciated from the foregoing, y may be equal to x and z may be less than x. Alternatively, y may be greater than z. Still further, y may be equal to z.

As also noted herein, x and y may be three bits and z may be two bits.

Finally, it is noted that the instruction word may have a plurality of register instruction fields and the encoding and selecting steps may be performed on at least two of the register instruction fields.

### Various examples are set out in the following clauses:

1. A method of selecting registers by a register instruction field having x bits in an instruction word, where a first group of registers has up to 2^{y} registers, where a second group of registers has 2^{z} registers, and where y and z are at least one and not greater than x, the method comprising:
   encoding a first instruction field with x bits wherein y bits of the x bits designates a register of the first group and z bits of the x bits designates a register of the second group; and
   selecting the register of the first group designated by the y bits of the first instruction field and the register of the second group designated by the z bits of the first instruction field,
   wherein x, y, and z are integers.
2. The method of clause 1, wherein y is equal to x and z is less than x.
3. The method of clause 1, wherein y is greater than z.
4. The method of clause 1, wherein y is equal to z.
5. The method of clause 1, wherein x and y are three bits and z is two bits.
6. The method of clause 1, wherein the instruction word has a plurality of register instruction fields and the encoding and selecting steps are performed on at least two of the register instruction fields.
7. A method for overloading at least one register, comprising:
   defining a register instruction field with x bits in an instruction word;
   defining a first group of registers comprising no more than 2^{y} registers;
   defining a second group of registers comprising no more than 2^{z} registers;
   encoding a first instruction field with x bits, wherein y bits of the x bits designates a register of the first group and z bits of the x bits designates a register of the second group;
   selecting the register of the first group designated by the y bits of the first instruction field;
   encoding the register of the first group with the y bits;
   selecting the register of the second group designated by the z bits of the first instruction field;
   encoding the register of the second group with the z bits, the z bits overloading at least a portion of the y bits;
   wherein x, y, and z are integers, y and z are at least one, and y and z are not greater than x.
8. The method of clause 7, wherein y is equal to x and z is less than x.
9. The method of clause 7, wherein y is greater than z.
10. The method of clause 7, wherein y is equal to z.
11. The method of clause 7, wherein x and y are three bits and z is two bits.
12. The method of clause 7, wherein the instruction word has a plurality of register instruction fields and the encoding and selecting steps are performed on at least two of the register instruction fields.

Although the present disclosure has been described and illustrated in detail, it is to be clearly understood that this is done by way of illustration and example only and is not to be taken by way of limitation. To the contrary, as noted above, the examples and embodiments illustrated above are intended to be exemplary of the invention and not limiting of the invention.

## Claims

1. An architecture comprising a first group of registers having at least two and no more than 2^{y} registers and a second group of registers having at least two and no more than 2^{z} registers, where y and z are at least one and not greater than x, said architecture being configured to enable selection of registers by a register instruction field having x bits in an instruction word,using a method comprising:
storing a first instruction field with x bits wherein y bits of the x bits designates a register of the first group and z bits of the x bits designates a register of the second goup; and
selecting the register of the first group designated by the y bits of the first instruction field and the register of the second goup designated by the z bits of the first instruction field,
wherein x, y and z arc integers, and wherein y is equal to x and is less than x.

2. The architecture of claim 1, wherein x and y are three bits and z is two bits.

3. The architecture of claim 1, wherein the instruction word has at least two register instruction fields and wherein the method further comprises the steps of
storing the second instruction field of the instruction word with x bits, wherein y bits of the x bits designate a second register of the first group of registers and z bits of the x bits designate a second register of the second goup of registers, and
selecting the second register of the first group designated by the y bits of the second instruction field and the second register of the second group designated by the z bits of the second instruction field.

4. An architecture comprising a first group of registers having at least two and no more than 2^{y} registers and a second group of registers having at least two and no more than 2^{z} registers, said architecture being configured to enable storing of at least one register instruction field having x bits in an instruction word using a method comprising:
storing a first instruction field with x bits, wherein y bits of the x bits designate a register of the first group and z bits of the x bits designate a register of the second group;
wherein x, y, and z are integers, y and z are at least one, and wherein y is equal to x and z is less than x.

5. The architecture of claim 4, wherein x and y are three bits and z is two bits.

6. The architecture of claim 4, wherein the instruction word has at least two register instruction fields and wherein the method further comprises the steps of
storing a second instruction field with x bits, wherein y bits of the x bits designates a second register of the first group and z bits of the x bits designates a second register of the second group.

7. A device comprising the architecture of any one of the preceding claims.

8. A device comprising:
a first group of registers configured to be selectable by a register instruction field having x bits in an instruction word, wherein the first group of registers has at least two and no more than 2^{y} registers; and
a second group of registers configured to be selectable by the register instruction field, wherein the second goup of registers has at least two and no more than 2' registers,
the device comprising means for:
selecting registers by the register instruction field;
storing a first instruction field with x bits wherein y bits of the x bits designates a register of the first group and z bits of the x bits designates a register of the second group; and
selecting the register of the first group designated by the y bits of the first instruction field and the register of the second group designated by the z bits of the first instruction field, wherein:
x, y and z are integers;
y and z are at least one and not greater than x;
y is equal to x; and
z is less than x.

9. The device of claim 8, wherein x and y are three bits and z is two bits.

10. The device of claim 8, wherein the instruction word has at least two register instruction fields and wherein the method further comprises the steps of
storing the second instruction field of the instruction word with x bits, wherein y bits of the x bits designate a second register of the first group of registers and z bits of the x bits designate a second register of the second group of registers, and
selecting the second register of the first group designated by the y bits of the second instruction field and the second register of the second group designated by the z bits of the second instruction field.

11. A device for storing at least one register instruction field having x bits in an instruction word, where a first group of registers has at least two and no more than 2^{y} registers and where a second group of registers has at least two and no more than 2^{z} registers, the device comprising means for:
storing a first instruction field with x bits, wherein y bits of the x bits designate a register of the first group and z bits of the x bits designate a register of the second goup;
wherein x, y, and z are integers, y and z are at least one, and wherein y is equal to x and z is less than x.

12. The device of claim 11, wherein x and y are three bits and z is two bits.

13. The device of claim 11, wherein the instruction word has at least two register instruction fields and wherein the method further comprises the steps of
storing a second instruction field with x bits, wherein y bits of the x bits designates a second register of the first group and z bits of the x bits designates a second register of the second group.
